# EUROPEAN PATENT APPLICATION

(11) **EP 4 462 869 A1**
(43) Date of publication of application: **13.11.2024**
(21) Application number: 23737035.8
(22) Date of filing: 04.01.2023
(51) Int. Cl.: H04W 36/00

(54) **CONDITION SWITCHING METHODS, TERMINAL, AND NETWORK SIDE DEVICE**

(30) Priority: 05.01.2022 CN 202210011193
(71) Applicant: VIVO MOBILE COMMUNICATION CO., LTD., Dongguan, Guangdong 523863 (CN)
(72) Inventor: LIU, Xuanbing, Dongguan, Guangdong 523863 (CN); BAO, Wei, Dongguan, Guangdong 523863 (CN)
(74) Representative: Murgitroyd & Company
(86) International application number: PCT/CN2023/070390
(87) International publication number: WO 2023/131172

(57) **Abstract**

Embodiments of this application disclose a conditional handover method, a terminal, and a network-side device, pertaining to the field of communication technologies. The conditional handover method in the embodiments of this application includes: evaluating, by a terminal, an MCG execution condition and at least one of the following: an SCG execution condition and a CPAC execution condition; and performing, by the terminal, conditional handover based on an evaluation result.

## Description

### CROSS-REFERENCE TO RELATED APPLICATION

The present invention claims priority to Chinese Patent Application No. 202210011193.5, filed with the China National Intellectual Property Administration on January 5, 2022, and entitled "CONDITIONAL HANDOVER METHOD, TERMINAL, AND NETWORK-SIDE DEVICE", which is incorporated herein by reference in its entirety.

### TECHNICAL FIELD

This application pertains to the field of communication technologies, and specifically relates to a conditional handover method, a terminal, and a network-side device.

### BACKGROUND

In a conditional handover process, a terminal may evaluate an execution condition corresponding to a master cell group (Master Cell Group, MCG) to select a primary cell (Primary cell, PCell) that meets the condition, but a signal condition of a secondary cell group (Secondary Cell Group, SCG) cannot be ensured. Consequently, SCG handover failure may be caused in the handover process; or an SCG connection existing before the handover is caused to break after the handover, and communication performance of the terminal is affected.

### SUMMARY

Embodiments of this application provide a conditional handover method, a terminal, and a network-side device to resolve a problem that communication performance of a terminal is affected because SCG handover fails or an SCG connection breaks in a conditional handover process.

According to a first aspect, a conditional handover method is provided and includes: evaluating, by a terminal, an MCG execution condition and at least one of the following: an SCG execution condition and a CPAC execution condition; and performing, by the terminal, conditional handover based on an evaluation result.

According to a second aspect, a conditional handover method is provided and includes: sending, by a network-side device, a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition.

According to a third aspect, a conditional handover apparatus is provided and includes: a processing module, configured to evaluate an MCG execution condition and at least one of the following: an SCG execution condition and a CPAC execution condition; and a handover module, configured to perform conditional handover based on an evaluation result.

According to a fourth aspect, a conditional handover apparatus is provided and includes: a sending module, configured to send a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition.

According to a fifth aspect, a terminal is provided. The terminal includes a processor and a memory. The memory stores a program or instructions executable on the processor. When the program or instructions are executed by the processor, the steps of the method according to the first aspect are implemented.

According to a sixth aspect, a terminal is provided and includes a processor and a communication interface. The processor is configured to: evaluate an MCG execution condition and at least one of the following: an SCG execution condition and a CPAC execution condition; and perform conditional handover based on an evaluation result.

According to a seventh aspect, a network-side device is provided. The network-side device includes a processor and a memory. The memory stores a program or instructions executable on the processor. When the program or instructions are executed by the processor, the steps of the method according to the second aspect are implemented.

According to an eighth aspect, a network-side device is provided and includes a processor and a communication interface. The communication interface is configured to send a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition.

According to a ninth aspect, a conditional handover system is provided and includes a terminal and a network-side device. The terminal may be configured to perform the steps of the method according to the first aspect. The network-side device may be configured to perform the steps of the method according to the second aspect.

According to a tenth aspect, a readable storage medium is provided. The readable storage medium stores a program or instructions. When the program or instructions are executed by a processor, the steps of the method according to the first aspect or the second aspect are implemented.

According to an eleventh aspect, a chip is provided. The chip includes a processor and a communication interface. The communication interface is coupled to the processor. The processor is configured to run a program or instructions to implement the steps of the method according to the first aspect or the second aspect.

According to a twelfth aspect, a computer program or program product is provided. The computer program or program product is stored in a storage medium. The computer program or program product is executed by at least one processor to implement the steps of the method according to the first aspect or the second aspect.

In the embodiments of this application, in addition to evaluating the MCG execution condition during the conditional handover, the terminal can also evaluate at least one of the SCG execution condition and the CPAC execution condition, and perform the conditional handover based on the evaluation result. This helps increase an SCG handover success rate or reduce SCG connection breaks, and improve communication performance of the terminal.

### BRIEF DESCRIPTION OF DRAWINGS

FIG. 1 is a schematic diagram of a wireless communication system according to an embodiment of this application;
FIG. 2 is a schematic flowchart of a conditional handover method according to an embodiment of this application;
FIG. 3 is a schematic flowchart of a conditional handover method according to an embodiment of this application;
FIG. 4 is a schematic structural diagram of a conditional handover apparatus according to an embodiment of this application;
FIG. 5 is a schematic structural diagram of a conditional handover apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

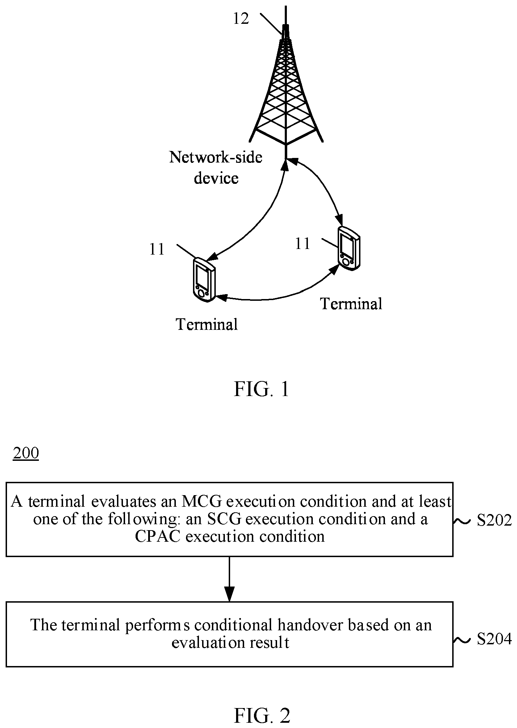

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

A conditional handover method provided in the embodiments of this application is hereinafter described in detail by using some embodiments and application scenarios thereof with reference to the accompanying drawings.

As shown in FIG. 2, an embodiment of this application provides a conditional handover method 200. The method may be performed by a terminal. In other words, the method may be performed by software or hardware installed in the terminal. The method includes the following steps.

S202. A terminal evaluates a master cell group (Master Cell Group, MCG) execution condition and at least one of the following: a secondary cell group (Secondary Cell Group, SCG) execution condition and a conditional primary secondary cell addition or change (Conditional PSCell (Primary secondary cell) Addition or Change, CPAC) execution condition.

This embodiment of this application may be applied to a scenario of dual-connectivity (Dual-Connectivity, DC) conditional handover, such as a scenario of multi radio access technology dual-connectivity (Multi Rat-Dual Connectivity, MR-DC) conditional handover.

In this embodiment, when performing conditional handover, in addition to evaluating the MCG execution condition, the terminal may also evaluate one of the following: (1) the SCG execution condition, (2) the CPAC execution condition, and (3) the SCG execution condition and the CPAC execution condition. The foregoing MCG execution condition may also be referred to as a conditional handover (Conditional Hand Over, CHO) execution condition.

Optionally, before S202, the terminal may further receive a conditional handover message, where the conditional handover message includes at least one conditional reconfiguration (or conditional configuration), and the conditional handover message may include a target SCG configuration and/or a CPAC configuration. For example, the conditional handover message received by the terminal includes three conditional configurations: (1) conditional configuration 1: PCelll configuration, including the target SCG configuration; (2) conditional configuration 2: PCell2 configuration, not including the target SCG configuration or CPAC configuration; and (3) conditional configuration 3: PCell3 configuration, including the CPAC configuration.

S204. The terminal performs conditional handover based on an evaluation result.

It may be understood that in a case that the terminal evaluates the SCG execution condition in S202, the evaluation result in this step may include: meeting the SCG execution condition or not meeting the SCG execution condition; or in a case that the terminal evaluates the CPAC execution condition in S202, the evaluation result in this step may include: meeting the CPAC execution condition or not meeting the CPAC execution condition.

For example, in this step, if the SCG execution condition is met, the terminal may perform conditional handover with the SCG configuration (CHO with SCG Configuration); or if the SCG execution condition is not met, the terminal may perform conditional handover without the SCG configuration, that is, conventional conditional handover.

For another example, in this step, if the CPAC execution condition is met, the terminal may perform conditional handover with CPAC (CHO with CPAC); or if the CPAC execution condition is not met, the terminal may perform conditional handover without CPAC, that is, conventional conditional handover.

For another example, in this step, if the SCG execution condition is met and the CPAC execution condition is met, the terminal may perform conditional handover with CPAC; or perform conditional handover with the SCG configuration.

In the conditional handover method provided in this embodiment of this application, in addition to evaluating the MCG execution condition during the conditional handover, the terminal can also evaluate at least one of the SCG execution condition and the CPAC execution condition, and perform the conditional handover based on the evaluation result. This helps increase an SCG handover success rate or reduce SCG connection breaks, and improve communication performance of the terminal.

The following describes in detail the foregoing helping increase an SCG handover success rate: In a case that the conditional handover configuration includes the target SCG configuration, the terminal may evaluate an MCG conditional handover execution condition (that is, the MCG execution condition) to select a primary cell (PCell) that meets the condition. If the SCG execution condition is not evaluated, a signal condition of a target SCG cannot be ensured, and SCG handover failure may be caused in the handover process. To resolve this technical problem, for conditional handover with the target SCG configuration, in this embodiment of this application, the SCG execution condition is evaluated. This helps preferentially select a target SCG cell, increase the SCG handover success rate, and improve communication performance of the terminal.

The following describes in detail the foregoing helping reduce SCG connection breaks: In a case that the conditional handover configuration includes CPAC, if the terminal evaluates the MCG conditional handover execution condition (that is, the MCG execution condition) to select a PCell that meets the condition, and after being handed over to a target cell, evaluates the CPAC execution condition in the target cell to perform a CPAC process, an SCG connection existing before the handover may be caused to break after the handover, and the SCG connection cannot be established until the CPAC process is completed. To resolve this technical problem, for the conditional handover with the CPAC configuration, in this embodiment of this application, the CPAC execution condition is evaluated in the conditional handover process. This helps simultaneously perform the CPAC process, thereby helping reduce SCG connection breaks and improve communication performance of the terminal.

In embodiment 200, it is mentioned that the terminal evaluates at least one of the SCG execution condition and the CPAC execution condition. The following describes several cases in detail.

Case 1: The terminal evaluates the SCG execution condition.

The case 1 may also be referred to as conditional handover with the target SCG configuration (CHO with SCG configuration).

In this embodiment, before the terminal evaluates the MCG execution condition, the method further includes: the terminal receives the conditional handover message including the target SCG configuration, where the conditional handover message includes at least one first conditional reconfiguration. The term "first" in the first conditional reconfiguration is intended only for distinguishing from a second conditional reconfiguration in case 2 and does not represent any other meanings. Therefore, the first conditional reconfiguration is also referred to as a conditional reconfiguration in some parts of this specification.

The first conditional reconfiguration includes a target execution condition and a conditional radio resource control (Radio Resource Control, RRC) reconfiguration, that is, the conditional handover message includes at least one target execution condition. Optionally, one first conditional reconfiguration includes one target execution condition.

Optionally, any one of the target execution conditions includes at least one of the following (1) to (4):
(1) The MCG execution condition, where the MCG execution condition may also be referred to as a CHO execution condition.
(2) The SCG execution condition, which is described in detail later.
(3) Duration of a first timer, where the first timer is used to control duration of evaluating the SCG execution condition.
   Optionally, after the MCG execution condition is met, the terminal may start the first timer to control the duration of subsequently evaluating the SCG execution condition, where the duration of the first timer may be 0. The first timer may be included in the MCG execution condition or the SCG execution condition.
(4) An SCG evaluation indication, where the SCG evaluation indication is used to indicate whether to evaluate the SCG execution condition.

It may be understood that in this embodiment, whether to configure the SCG execution condition or the first timer may indicate whether to evaluate the SCG execution condition. For example, if the SCG execution condition or the first timer is configured, it indicates that the SCG execution condition needs to be evaluated.

Optionally, the conditional RRC reconfiguration included in the first conditional reconfiguration includes: (1) an MCG configuration, where the MCG configuration includes a candidate PCell configuration, and a candidate PCell cell includes a target primary cell PCell; and (2) optionally, a target SCG configuration, where the target SCG configuration includes a target primary secondary cell PSCell configuration. One conditional RRC reconfiguration includes no target SCG configuration or one target SCG configuration.

Optionally, a configuration related to the SCG execution condition includes at least one of the following:
(1) a first measurement identifier (Identifier, ID), where the first measurement ID is associated with the SCG execution condition, and measurement corresponding to the first measurement ID may be configured by a network-side device;
(2) a second measurement ID, where after a measurement event corresponding to the second measurement ID is triggered, it is considered that the SCG execution condition is met;
(3) a first measurement event, where the first measurement event is applied to a source PSCell and/or a target PSCell, the first measurement event may be, for example, an A3 measurement event or an A5 measurement event, the A3 measurement event includes: signal quality of a neighboring cell is an offset higher than signal quality of a special cell (for example, a primary secondary cell) (Neighbour becomes offset better than SpCell (Special Cell)), and the A5 measurement event includes: signal quality of a special cell (such as a primary secondary cell) is lower than a first threshold, and signal quality of a neighboring cell is higher than a second threshold (SpCell becomes worse than threshold 1 and neighbour becomes better than threshold2);
(4) a second measurement event, where a serving cell in the second measurement event is a target PSCell, the second measurement event may be, for example, an A1 measurement event, a serving cell in the A1 measurement event is the target PSCell, and the A1 measurement event includes: signal quality of the serving cell is higher than a threshold (Serving becomes better than threshold);
(5) a third measurement event, where a neighboring cell in the third measurement event is a target PSCell, the third measurement event may be, for example, an A4 measurement event or a B1 measurement event, the A4 measurement event includes: signal quality of the neighboring cell is higher than a threshold (Neighbour becomes better than threshold), and the B1 measurement event includes: signal quality of an inter radio access technology neighboring cell is higher than a threshold (Inter RAT neighbour becomes better than threshold);
(6) a target threshold, where after a signal quality measurement value of a target PSCell is better than the target threshold, it is considered that the SCG execution condition is met; and
(7) the duration of the first timer, where the first timer is used to control the duration of evaluating the SCG execution condition.

Optionally, after the MCG execution condition is met, the terminal may start the first timer to control the duration of subsequently evaluating the SCG execution condition, where the duration of the first timer may be 0. The first timer may be included in the MCG execution condition or the SCG execution condition.

Optionally, a configuration related to the SCG execution condition is included in at least one of the following:
(1) a (target) SCG configuration in a conditional RRC reconfiguration;
(2) the MCG execution condition; and
(3) a conditional reconfiguration.

In this embodiment, for a (first) conditional reconfiguration, if the conditional reconfiguration includes the target SCG configuration, the terminal evaluates the MCG execution condition and the SCG execution condition; or if the conditional reconfiguration does not include the target SCG configuration, the terminal may evaluate only the MCG execution condition.

Optionally, in this embodiment, after the terminal evaluates the MCG execution condition and the SCG execution condition, the method further includes at least one of the following (1) to (4):
(1) In a case that a candidate PCell meets the MCG execution condition, if a conditional reconfiguration corresponding to the candidate PCell includes a target SCG configuration, and an SCG included in the target SCG configuration does not meet the SCG execution condition, and/or if at least one conditional reconfiguration includes a target SCG configuration, starting the first timer.

For example, among a plurality of conditional reconfigurations, a conditional reconfiguration 1: PCell 1, includes a target SCG configuration; and a conditional reconfiguration 2: PCell2, does not include a target SCG configuration. In a case that the PCell 1 meets the MCG execution condition, if the SCG does not meet the SCG execution condition, the first timer is started. In a case that the PCell2 meets the MCG execution condition, the first timer is started. Optionally, if the duration of the first timer is 0, it indicates that the first timer is not started.

(2) During running of the first timer, continuing to evaluate the MCG execution condition and the SCG execution condition.

In this example, for example, if at least one conditional reconfiguration includes the target SCG configuration, the terminal starts the first timer, and during running of the first timer, the terminal continues to evaluate the MCG execution condition and the SCG execution condition.

In this example, for another example, the conditional reconfiguration 1 includes the PCell1 and the target SCG configuration, and the conditional reconfiguration 2 includes the PCell2 but does not include the target SCG configuration. In a case that the PCell1 meets the MCG execution condition but the SCG in the conditional reconfiguration 1 does not meet the SCG execution condition, the terminal may start the first timer. During running of the first timer, the terminal continues to evaluate whether the PCell2 in the conditional reconfiguration 2 meets the MCG execution condition, evaluate whether the SCG in the conditional reconfiguration 1 meets the SCG execution condition, and so on.

(3) If the MCG execution condition is met and the SCG execution condition is met, stopping the first timer.

For example, if the MCG execution condition is met, and the SCG execution condition is met, and the candidate PCell cell included in the conditional reconfiguration is the target PCell cell, the first timer is stopped.

(4) If the first timer expires, stopping evaluating the MCG execution condition and/or the SCG execution condition.

The first timer is used to control the duration of evaluating the SCG execution condition. The duration of the first timer may be prescribed by a protocol or configured by the network-side device. For a specific function of the first timer, refer to the foregoing description.

It should be noted that in this embodiment, only one of the foregoing (1) to (4) may be performed, or more of the foregoing (1) to (4) may be performed simultaneously.

Optionally, that the terminal performs conditional handover based on an evaluation result includes at least one of the following (1) to (6):
(1) If the MCG execution condition is met, performing first conditional handover or second conditional handover.
(2) If the MCG execution condition is met and the first timer expires, performing second conditional handover, where the first timer is used to control the duration of evaluating the SCG execution condition.
(3) If the MCG execution condition and the SCG execution condition are met, performing first conditional handover.
(4) If the MCG execution condition is met but the SCG execution condition is not met, performing second conditional handover.
(5) In a case that execution of first conditional handover or second conditional handover is supported, performing first conditional handover.
   In this example, for example, in the case that the first conditional handover or the second conditional handover is supported, the first conditional handover is performed preferentially. Optionally, after the first conditional handover is performed preferentially, if the first conditional handover fails, the second conditional handover may be further performed.
(6) In a case that a plurality of candidate PCells meet the MCG execution condition, selecting a candidate PCell corresponding to a conditional reconfiguration that meets the SCG execution condition as a target PCell, or selecting a candidate PCell corresponding to a conditional reconfiguration that includes a strongest candidate primary secondary cell PSCell as a target PCell.

In this example, for example, in the case that the plurality of candidate PCells meet the MCG execution condition, the candidate PCell corresponding to the conditional reconfiguration that meets the SCG execution condition is preferentially selected as the target PCell, or the candidate PCell corresponding to the conditional reconfiguration that includes the strongest candidate PSCell is preferentially selected as the target PCell.

The first conditional handover (CHO with SCG Configuration) includes: performing conditional handover to hand over to the target PCell, and applying the target SCG configuration, that is, performing conditional handover with the SCG configuration (CHO with SCG Configuration).

The second conditional handover includes: performing conditional handover to hand over to the target PCell.

Optionally, the second conditional handover further includes: in a case that a conditional reconfiguration corresponding to the target PCell includes the target SCG configuration, skipping applying the target SCG configuration.

In each of the foregoing embodiments, in a case that the terminal performs the second conditional handover, the method further includes: the terminal sends a conditional handover complete message, where the conditional handover complete message includes at least one of the following: an SCG failure indication; SCG failure type (Failure Type) information; an SCG measurement result; and a measurement result of at least one target PSCell. The SCG failure type includes, for example, SCG attempt failure, SCG not attempted, and SCG execution condition not met.

Case 2: The terminal evaluates the CPAC execution condition.

The case 2 may also be referred to as conditional handover configuration with CPAC (CHO with CPAC).

In this embodiment, before the terminal evaluates the MCG execution condition, the method further includes: the terminal receives a conditional handover message including CPAC, where the conditional handover message includes at least one second conditional reconfiguration. The second conditional reconfiguration includes at least one of the following:
(1) the MCG execution condition, also referred to as a CHO execution condition, including a measurement event such as an A3 measurement event or an A5 measurement event, and applicable to an MCG candidate cell;
(2) an MCG reconfiguration, where the MCG reconfiguration includes a candidate PCell configuration, and a candidate PCell cell includes a target PCell; and
(3) a CPAC conditional reconfiguration, where the CPAC conditional reconfiguration includes the CPAC execution condition and at least one SCG configuration, the SCG configuration includes a candidate PSCell configuration, and a candidate PSCell cell includes a target PSCell.

Optionally, the CPAC configuration is included in the MCG reconfiguration.

In this embodiment, for a (second) conditional reconfiguration, if the conditional reconfiguration includes the CPAC conditional reconfiguration, the terminal evaluates the MCG execution condition and the CPAC execution condition; or if the conditional reconfiguration does not include the CPAC conditional reconfiguration, the terminal may evaluate only the MCG execution condition.

Optionally, in this embodiment, after the terminal evaluates the MCG execution condition and the CPAC execution condition, the method further includes at least one of the following (1) to (4):
(1) In a case that a candidate PCell meets the MCG execution condition, if the CPAC execution condition included in a conditional reconfiguration corresponding to the candidate PCell is not met, and/or at least one conditional reconfiguration includes a CPAC configuration, starting the first timer.
   For example, among a plurality of conditional reconfigurations, a conditional reconfiguration 1: PCell1, includes CPAC; and a conditional reconfiguration 2: PCell2, does not include a target SCG and CPAC. In a case that the PCell1 meets the MCG execution condition, if the CPAC execution condition is not met, the first timer is started. In a case that the PCell2 meets the MCG execution condition, the first timer is started. Optionally, if the duration of the first timer is 0, it indicates that the first timer is not started.
(2) During running of the first timer, continuing to evaluate the MCG execution condition and the CPAC execution condition.
(3) If the MCG execution condition is met and the CPAC execution condition is met, stopping the first timer.
   For example, for a second conditional reconfiguration, when the MCG execution condition is met and its CPAC execution condition is met, the candidate PCell cell included in the second conditional reconfiguration is the target PCell cell, the candidate PSCell cell included in the CPAC conditional reconfiguration is the target PSCell cell, and the terminal stops the first timer.
(4) If the first timer expires, stopping evaluating the MCG execution condition and/or the CPAC execution condition.

The first timer is used to control the duration of evaluating the CPAC execution condition. The duration of the first timer may be prescribed by a protocol or configured by the network-side device. For a specific function of the first timer, refer to the foregoing description.

It should be noted that in this embodiment, only one of the foregoing (1) to (4) may be performed, or more of the foregoing (1) to (4) may be performed simultaneously.

Optionally, that the terminal performs conditional handover based on an evaluation result includes at least one of the following:
(1) if the MCG execution condition is met, performing third conditional handover or fourth conditional handover;
(2) if the MCG execution condition is met, after the first timer expires, performing fourth conditional handover, where the first timer is used to control the duration of evaluating the CPAC execution condition;
(3) if the MCG execution condition and the CPAC execution condition are met, performing third conditional handover;
(4) if the MCG execution condition is met but the CPAC execution condition is not met, performing fourth conditional handover; and
(5) in a case that a plurality of candidate PCells meet the MCG execution condition, selecting a candidate PCell corresponding to a conditional reconfiguration that meets the CPAC execution condition as a target PCell, or selecting a candidate PCell corresponding to a conditional reconfiguration that includes a strongest candidate PSCell as a target PCell.

The third conditional handover includes: performing conditional handover and performing CPAC, that is, performing conditional handover with CPAC (CHO with CPAC).

In a case that the third conditional handover is performed, the method further includes: the terminal sends an RRC message to the target PCell, where the RRC message is used to indicate that the conditional handover is completed. Optionally, the RRC message includes a CPAC complete message, and the RRC message includes information related to the target PSCell.

In this embodiment, for example, the terminal sends, to the target PCell, an RRC message, such as an RRC reconfiguration complete message (RRCReconfigurationComplete), denoted as a CHO complete message, which is used to indicate that the CHO handover is completed, and includes a CPAC complete message such as RRCReconfigurationComplete. The CHO complete message includes information related to the target PSCell, such as a conditional configuration ID of the target PSCell in the CPAC conditional configuration.

The fourth conditional handover includes: performing conditional handover but skipping performing CPAC.

In a case that the fourth conditional handover is performed, the method further includes: the terminal sends a conditional handover complete message (such as RRCReconfigurationComplete), where the conditional handover complete message includes at least one of the following: an SCG failure indication; SCG failure type information; an SCG measurement result; and a measurement result of a CPAC candidate cell.

Case 3: The terminal evaluates the SCG execution condition and the CPAC execution condition.

In this embodiment, that the terminal performs conditional handover based on an evaluation result includes at least one of the following:
(a) if the MCG execution condition and the CPAC execution condition are met, performing third conditional handover;
(b) if the MCG execution condition and the SCG execution condition are met, performing first conditional handover;
(c) if CPAC is configured, and the MCG execution condition is met but the CPAC execution condition is not met, performing fourth conditional handover;
(d) if the SCG is configured, and the MCG execution condition is met but the SCG execution condition is not met, performing second conditional handover;
(e) if the conditional handover message received by the terminal does not include the CPAC configuration or SCG configuration, performing fifth conditional handover, that is, performing conventional CHO handover; and
(f) if the conditional handover message received by the terminal includes the CPAC configuration and/or SCG configuration, but the SCG execution condition or the CPAC execution condition is not met, performing fifth conditional handover, that is, performing conventional CHO handover.

It should be noted that an order of (a) and (b) is not fixed and that an order of (c) and (d) is not fixed either.

To describe in detail the conditional handover method provided in this embodiment of this application, the following description is provided with reference to several specific embodiments.

### Embodiment 1

In this embodiment, a conditional handover message received by a terminal includes an SCG configuration (CHO with SCG configuration). This embodiment includes the following steps.

Step 1: A terminal (User Equipment, UE) receives a conditional handover message including an SCG configuration, where the conditional handover message includes an SCG execution condition.

Step 2: The UE evaluates a CHO execution condition, and optionally, evaluates the SCG execution condition at the same time.

Step 3: After the CHO execution condition is met, perform conditional handover, including one of the following: (1) if the SCG execution condition is met, performing first conditional handover; and (2) if the SCG execution condition is not met, performing second conditional handover. For the first conditional handover and the second conditional handover, refer to the description of the foregoing embodiment.

### Embodiment 2

In this embodiment, a conditional handover message received by a terminal includes an SCG configuration (CHO with SCG configuration), and further includes duration of a first timer. This embodiment includes the following steps.

Step 1: UE receives a conditional handover message including an SCG configuration, where the conditional handover message includes an SCG execution condition.

Step 2: The UE evaluates a CHO execution condition, and optionally, evaluates the SCG execution condition at the same time.

Step 3: After the CHO execution condition is met, start a first timer. If the SCG execution condition is met, stop the first timer.

Step 4: After the first timer expires or the SCG execution condition is met, the UE performs conditional handover, including one of the following: (1) if the SCG execution condition is met, performing first conditional handover; and (2) if the SCG execution condition is not met, performing second conditional handover. For the first conditional handover and the second conditional handover, refer to the description of the foregoing embodiment.

### Embodiment 3

In this embodiment, a conditional handover message received by a terminal includes a CPAC configuration (CHO with CPAC). This embodiment includes the following steps.

Step 1: UE receives a conditional handover message including CPAC.

Step 2: The UE evaluates a CHO execution condition, and optionally, evaluates a CPAC execution condition at the same time.

Step 3: After the CHO execution condition is met, perform conditional handover, including one of the following: (1) if the CPAC execution condition is met, performing third conditional handover; and (2) if the CPAC execution condition is not met, performing fourth conditional handover. For the third conditional handover and the fourth conditional handover, refer to the description of the foregoing embodiment.

### Embodiment 4

In this embodiment, a conditional handover message received by a terminal includes a CPAC configuration (CHO with CPAC), and further includes duration of a first timer. This embodiment includes the following steps.

Step 1: UE receives a conditional handover message including CPAC.

Step 2: The UE evaluates a CHO execution condition, and optionally, evaluates a CPAC execution condition at the same time.

Step 3: After the CHO execution condition is met, start a first timer. If the CPAC execution condition is met, stop the first timer.

Step 4: After the first timer expires or the CPAC execution condition is met, the UE performs conditional handover, including one of the following: (1) if the CPAC execution condition is met, performing third conditional handover; and (2) if the CPAC execution condition is not met, performing fourth conditional handover. For the third conditional handover and the fourth conditional handover, refer to the description of the foregoing embodiment.

### Embodiment 5

In this embodiment, a conditional handover message received by a terminal includes an SCG configuration and a CPAC configuration, that is, a mixed configuration (CHO with CPAC and CHO with SCG Configuration). This embodiment includes the following steps.

Step 1: UE receives a conditional handover message, where the conditional handover message includes at least one of the following: a first conditional reconfiguration, a second conditional reconfiguration, and a CHO conditional reconfiguration, where the CHO conditional reconfiguration does not include an SCG configuration or CPAC.

Step 2: The UE evaluates a CHO execution condition, and optionally, evaluates an SCG execution condition and/or a CPAC execution condition at the same time.

Step 3: After the CHO execution condition is met, start a first timer. If the SCG execution condition or the CPAC execution condition is met, stop the first timer.

Step 4: After the first timer expires or the SCG execution condition or the CPAC execution condition is met, the UE performs conditional handover, including one of the following:
(a) if the CPAC execution condition is met, performing third conditional handover;
(b) if the SCG execution condition is met, performing first conditional handover;
(c) if CPAC is configured and the CPAC execution condition is not met, performing fourth conditional handover;
(d) if an SCG is configured and the SCG execution condition is not met, performing second conditional handover;
(e) if the conditional handover message does not include CPAC or the SCG configuration, performing fifth conditional handover, that is, performing conventional CHO handover; and
(f) if the conditional handover message received by the terminal includes the CPAC configuration and/or SCG configuration, but the SCG execution condition or the CPAC execution condition is not met, performing fifth conditional handover, that is, performing conventional CHO handover.

It should be noted that an order of (a) and (b) is not fixed and that an order of (c) and (d) is not fixed either.

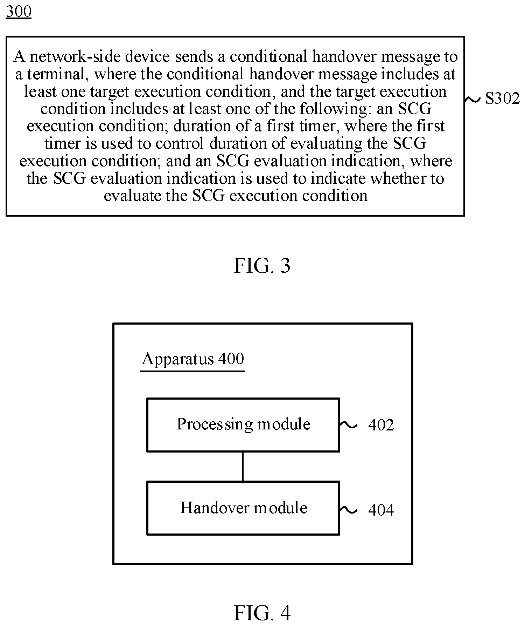

The conditional handover method according to this embodiment of this application is described in detail above with reference to FIG. 2. The following describes in detail a conditional handover method according to another embodiment of this application with reference to FIG. 3. It may be understood that the description of interaction between the network-side device and the terminal from the network-side device is the same as or corresponds to the description on the terminal side in the method shown in FIG. 2. To avoid repetition, related descriptions are appropriately omitted.

FIG. 3 is a schematic flowchart of a conditional handover method according to an embodiment of this application. The method may be applied to a network-side device. As shown in FIG. 3, the method 300 includes the following step.

S302. A network-side device sends a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition.

In this embodiment of this application, the network-side device sends the conditional handover message to the terminal, where the conditional handover message includes at least one target execution condition, and the target execution condition includes at least one of the following: the SCG execution condition; the duration of the first timer, where the first timer is used to control the duration of evaluating the SCG execution condition; and the SCG evaluation indication, where the SCG evaluation indication is used to indicate whether to evaluate the SCG execution condition. In this way, in addition to evaluating an MCG execution condition during conditional handover, the terminal can also evaluate the SCG execution condition, and perform the conditional handover based on an evaluation result. This helps increase an SCG handover success rate, and improve communication performance of the terminal.

Optionally, in an embodiment, a configuration related to the SCG execution condition includes at least one of the following (1) to (7):
(1) a first measurement ID, where the first measurement ID is associated with the SCG execution condition;
(2) a second measurement ID, where after a measurement event corresponding to the second measurement ID is triggered, it is considered that the SCG execution condition is met;
(3) a first measurement event, where the first measurement event is applied to a source PSCell and/or a target PSCell;
(4) a second measurement event, where a serving cell in the second measurement event is a target PSCell;
(5) a third measurement event, where a neighboring cell in the third measurement event is a target PSCell;
(6) a target threshold, where after a signal quality measurement value of a target PSCell is better than the target threshold, it is considered that the SCG execution condition is met; and
(7) the duration of the first timer, where the first timer is used to control the duration of evaluating the SCG execution condition.

Optionally, in an embodiment, a configuration related to the SCG execution condition is included in at least one of the following: (1) an SCG configuration in a conditional RRC reconfiguration; (2) the MCG execution condition; and (3) a conditional reconfiguration.

Optionally, in an embodiment, after the network-side device sends the conditional handover message to the terminal, the method further includes: the network-side device receives a conditional handover complete message sent by the terminal, where the conditional handover complete message includes at least one of the following: (1) an SCG failure indication; (2) SCG failure type information; (3) an SCG measurement result; (4) a measurement result of at least one target PSCell; and (5) a measurement result of a CPAC candidate cell.

The conditional handover method provided in this embodiment of this application may be performed by a conditional handover apparatus. A conditional handover apparatus provided in an embodiment of this application is described by assuming that the conditional handover method in this embodiment of this application is performed by the conditional handover apparatus.

FIG. 4 is a schematic structural diagram of a conditional handover apparatus according to an embodiment of this application. The apparatus may correspond to a terminal in another embodiment. As shown in FIG. 4, the apparatus 400 includes the following modules:
a processing module 402, configured to evaluate an MCG execution condition and at least one of the following: an SCG execution condition and a CPAC execution condition; and
a handover module 404, configured to perform conditional handover based on an evaluation result.

The conditional handover apparatus provided in this embodiment of this application, in addition to evaluating the MCG execution condition during the conditional handover, can also evaluate at least one of the SCG execution condition and the CPAC execution condition, and perform the conditional handover based on the evaluation result. This helps increase an SCG handover success rate or reduce SCG connection breaks, and improve communication performance.

Optionally, in an embodiment, the processing module 402 is further configured to perform at least one of the following (1) to (4):
(1) in a case that a candidate PCell meets the MCG execution condition, if a conditional reconfiguration corresponding to the candidate PCell includes a target SCG configuration, and an SCG included in the target SCG configuration does not meet the SCG execution condition, and/or if at least one conditional reconfiguration includes a target SCG configuration, starting a first timer;
(2) during running of the first timer, continuing to evaluate the MCG execution condition and the SCG execution condition;
(3) if the MCG execution condition is met and the SCG execution condition is met, stopping the first timer; and
(4) if the first timer expires, stopping evaluating the MCG execution condition and/or the SCG execution condition, where
the first timer is used to control duration of evaluating the SCG execution condition.

Optionally, in an embodiment, the handover module 404 is configured to perform at least one of the following (1) to (6):
(1) if the MCG execution condition is met, performing first conditional handover or second conditional handover;
(2) if the MCG execution condition is met and the first timer expires, performing second conditional handover, where the first timer is used to control the duration of evaluating the SCG execution condition;
(3) if the MCG execution condition and the SCG execution condition are met, performing first conditional handover;
(4) if the MCG execution condition is met but the SCG execution condition is not met, performing second conditional handover;
(5) in a case that execution of first conditional handover or second conditional handover is supported, performing first conditional handover; and
(6) in a case that a plurality of candidate PCells meet the MCG execution condition, selecting a candidate PCell corresponding to a conditional reconfiguration that meets the SCG execution condition as a target PCell, or selecting a candidate PCell corresponding to a conditional reconfiguration that includes a strongest candidate PSCell as a target PCell, where
the first conditional handover includes: performing conditional handover to hand over to the target PCell, and applying the target SCG configuration; and the second conditional handover includes: performing conditional handover to hand over to the target PCell.

Optionally, in an embodiment, the second conditional handover further includes: in a case that a conditional reconfiguration corresponding to the target PCell includes the target SCG configuration, skipping applying the target SCG configuration.

Optionally, in an embodiment, the apparatus further includes a sending module, configured to send a conditional handover complete message in a case that the second conditional handover is performed, where the conditional handover complete message includes at least one of the following: an SCG failure indication; SCG failure type information; an SCG measurement result; and a measurement result of at least one target PSCell.

Optionally, in an embodiment, the apparatus further includes a receiving module, configured to receive a conditional handover message, where the conditional handover message includes at least one target execution condition, and the target execution condition includes at least one of the following: (1) the MCG execution condition; (2) the SCG execution condition; (3) duration of the first timer, where the first timer is used to control the duration of evaluating the SCG execution condition; and (4) an SCG evaluation indication, where the SCG evaluation indication is used to indicate whether to evaluate the SCG execution condition.

Optionally, in an embodiment, a configuration related to the SCG execution condition includes at least one of the following (1) to (7):
(1) a first measurement ID, where the first measurement ID is associated with the SCG execution condition;
(2) a second measurement ID, where after a measurement event corresponding to the second measurement ID is triggered, it is considered that the SCG execution condition is met;
(3) a first measurement event, where the first measurement event is applied to a source PSCell and/or a target PSCell;
(4) a second measurement event, where a serving cell in the second measurement event is a target PSCell;
(5) a third measurement event, where a neighboring cell in the third measurement event is a target PSCell;
(6) a target threshold, where after a signal quality measurement value of a target PSCell is better than the target threshold, it is considered that the SCG execution condition is met; and
(7) the duration of the first timer, where the first timer is used to control the duration of evaluating the SCG execution condition.

Optionally, in an embodiment, a configuration related to the SCG execution condition is included in at least one of the following: (1) an SCG configuration in a conditional RRC reconfiguration; (2) the MCG execution condition; and (3) a conditional reconfiguration.

Optionally, in an embodiment, the processing module 402 is further configured to perform at least one of the following (1) to (4):
(1) in a case that a candidate PCell meets the MCG execution condition, if the CPAC execution condition included in a conditional reconfiguration corresponding to the candidate PCell is not met, and/or at least one conditional reconfiguration includes a CPAC configuration, starting a first timer;
(2) during running of the first timer, continuing to evaluate the MCG execution condition and the CPAC execution condition;
(3) if the MCG execution condition is met and the CPAC execution condition is met, stopping the first timer; and
(4) if the first timer expires, stopping evaluating the MCG execution condition and/or the CPAC execution condition, where
the first timer is used to control duration of evaluating the CPAC execution condition.

Optionally, in an embodiment, the handover module 404 is configured to perform at least one of the following (1) to (5):
(1) if the MCG execution condition is met, performing third conditional handover or fourth conditional handover;
(2) if the MCG execution condition is met, after the first timer expires, performing fourth conditional handover, where the first timer is used to control the duration of evaluating the CPAC execution condition;
(3) if the MCG execution condition and the CPAC execution condition are met, performing third conditional handover;
(4) if the MCG execution condition is met but the CPAC execution condition is not met, performing fourth conditional handover; and
(5) in a case that a plurality of candidate PCells meet the MCG execution condition, selecting a candidate PCell corresponding to a conditional reconfiguration that meets the CPAC execution condition as a target PCell, or selecting a candidate PCell corresponding to a conditional reconfiguration that includes a strongest candidate PSCell as a target PCell, where
the third conditional handover includes: performing conditional handover and performing CPAC, and the fourth conditional handover includes: performing conditional handover but skipping performing CPAC.

Optionally, in an embodiment, the apparatus further includes a sending module, configured to send an RRC message to the target PCell in a case that the third conditional handover is performed, where the RRC message is used to indicate that the conditional handover is completed.

Optionally, in an embodiment, the RRC message includes a CPAC complete message, and the RRC message includes information related to the target PSCell.

Optionally, in an embodiment, the apparatus further includes a sending module, configured to send a conditional handover complete message in a case that the fourth conditional handover is performed, where the conditional handover complete message includes at least one of the following: an SCG failure indication; SCG failure type information; an SCG measurement result; and a measurement result of a CPAC candidate cell.

For the apparatus 400 in this embodiment of this application, refer to the processes of the method 200 in the corresponding embodiment of this application. In addition, the units/modules of the apparatus 400 and other operations and/or functions described above are used to implement the corresponding processes of the method 200, with the same or equivalent technical effect achieved. For brevity, details are not described herein again.

The conditional handover apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

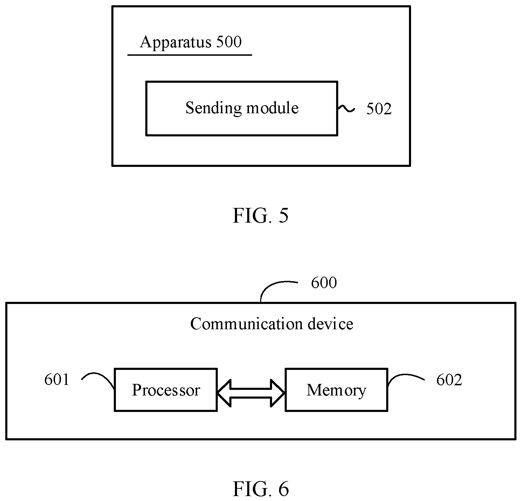

FIG. 5 is a schematic structural diagram of a conditional handover apparatus according to an embodiment of this application. The apparatus may correspond to a network-side device in another embodiment. As shown in FIG. 5, the apparatus 500 includes the following module:
a sending module 502, configured to send a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition.

Optionally, the apparatus 500 further includes a processing module, such as a processor.

In this embodiment of this application, the sending module sends the conditional handover message to the terminal, where the conditional handover message includes at least one target execution condition, and the target execution condition includes at least one of the following: the SCG execution condition; the duration of the first timer, where the first timer is used to control the duration of evaluating the SCG execution condition; and the SCG evaluation indication, where the SCG evaluation indication is used to indicate whether to evaluate the SCG execution condition. In this way, in addition to evaluating an MCG execution condition during conditional handover, the terminal can also evaluate the SCG execution condition, and perform the conditional handover based on an evaluation result. This helps increase an SCG handover success rate, and improve communication performance of the terminal.

Optionally, in an embodiment, a configuration related to the SCG execution condition includes at least one of the following (1) to (7):
(1) a first measurement ID, where the first measurement ID is associated with the SCG execution condition;
(2) a second measurement ID, where after a measurement event corresponding to the second measurement ID is triggered, it is considered that the SCG execution condition is met;
(3) a first measurement event, where the first measurement event is applied to a source PSCell and/or a target PSCell;
(4) a second measurement event, where a serving cell in the second measurement event is a target PSCell;
(5) a third measurement event, where a neighboring cell in the third measurement event is a target PSCell;
(6) a target threshold, where after a signal quality measurement value of a target PSCell is better than the target threshold, it is considered that the SCG execution condition is met; and
(7) the duration of the first timer, where the first timer is used to control the duration of evaluating the SCG execution condition.

Optionally, in an embodiment, a configuration related to the SCG execution condition is included in at least one of the following: (1) an SCG configuration in a conditional RRC reconfiguration; (2) the MCG execution condition; and (3) a conditional reconfiguration.

Optionally, in an embodiment, the apparatus further includes a receiving module, configured to receive a conditional handover complete message sent by the terminal, where the conditional handover complete message includes at least one of the following: (1) an SCG failure indication; (2) SCG failure type information; (3) an SCG measurement result; (4) a measurement result of at least one target PSCell; and (5) a measurement result of a CPAC candidate cell.

For the apparatus 500 in this embodiment of this application, refer to the processes of the method 300 in the corresponding embodiment of this application. In addition, the units/modules of the apparatus 500 and other operations and/or functions described above are used to implement the corresponding processes of the method 300, with the same or equivalent technical effect achieved. For brevity, details are not described herein again.

The conditional handover apparatus provided in this embodiment of this application can implement each process implemented in the method embodiment in FIG. 2 or FIG. 3, with the same technical effect achieved. To avoid repetition, details are not described herein again.

Optionally, as shown in FIG. 6, an embodiment of this application further provides a communication device 600, including a processor 601, a memory 602, and a program or instructions stored in the memory 602 and executable on the processor 601. For example, when the communication device 600 is a terminal, and the program or instructions are executed by the processor 601, each step of the foregoing embodiment of the conditional handover method is implemented, with the same technical effect achieved. To avoid repetition, details are not described herein again. When the communication device 600 is a network-side device, and the program or instructions are executed by the processor 601, each step of the foregoing embodiment of the conditional handover method is implemented, with the same technical effect achieved. To avoid repetition, details are not described herein again.

An embodiment of this application further provides a terminal, including a processor and a communication interface. The processor is configured to: evaluate an MCG execution condition and at least one of the following: an SCG execution condition and a CPAC execution condition; and perform conditional handover based on an evaluation result. The terminal embodiment corresponds to the foregoing terminal-side method embodiment, and each implementation process and implementation of the foregoing method embodiment can be applied to the terminal embodiment, with the same technical effect achieved.

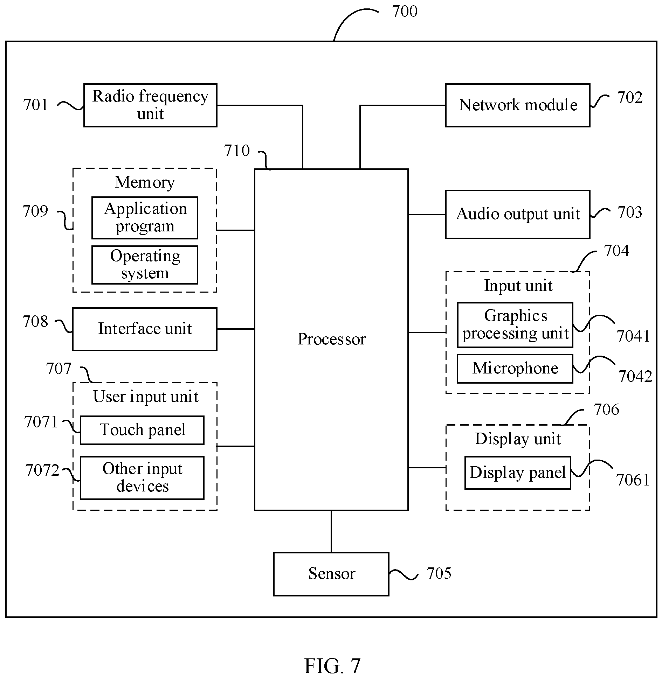

Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

The processor 710 may be configured to: evaluate an MCG execution condition and at least one of the following: an SCG execution condition and a CPAC execution condition; and perform conditional handover based on an evaluation result.

The terminal provided in this embodiment of this application, in addition to evaluating the MCG execution condition during the conditional handover, can also evaluate at least one of the SCG execution condition and the CPAC execution condition, and perform the conditional handover based on the evaluation result. This helps increase an SCG handover success rate or reduce SCG connection breaks, and improve communication performance of the terminal.

The terminal 700 provided in this embodiment of this application can further implement each process of the foregoing conditional handover method embodiment, with the same technical effect achieved. To avoid repetition, details are not described herein again.

An embodiment of this application further provides a network-side device, including a processor and a communication interface. The communication interface is configured to send a conditional handover message to a terminal, where the conditional handover message includes at least one target execution condition, and the target execution condition includes at least one of the following: an SCG execution condition; duration of a first timer, where the first timer is used to control duration of evaluating the SCG execution condition; and an SCG evaluation indication, where the SCG evaluation indication is used to indicate whether to evaluate the SCG execution condition. The network-side device embodiment corresponds to the foregoing method embodiment of the network-side device, and each implementation process and implementation of the foregoing method embodiment can be applied to the network-side device embodiment, with the same technical effect achieved.

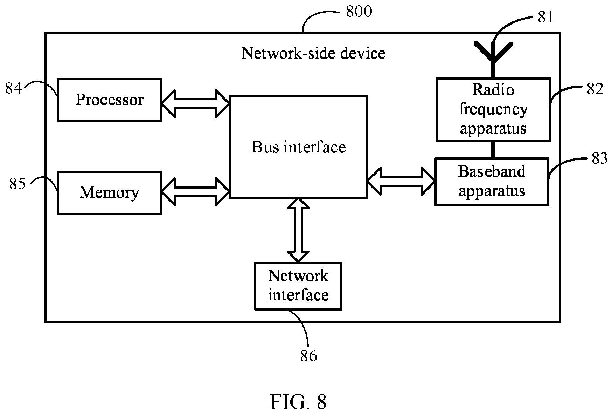

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out by using the antenna 81.

The method performed by the network-side device in the foregoing embodiment may be implemented in the baseband apparatus 83. The baseband apparatus 83 includes a baseband processor.

The baseband apparatus 83 may include, for example, at least one baseband unit, where a plurality of chips are disposed on the baseband unit. As shown in FIG. 8, one of the chips is, for example, the baseband processor, connected to the memory 85 by using a bus interface, to invoke a program in the memory 85 to perform the operation of the network device shown in the foregoing method embodiment.

The network-side device may further include a network interface 86, where the interface is, for example, a common public radio interface (common public radio interface, CPRI).

Specifically, the network-side device 800 in this embodiment of the present invention further includes a program or instructions stored in the memory 85 and executable on the processor 84. When the processor 84 invokes the program or instructions in the memory 85, the method performed by each module shown in FIG. 5 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the conditional handover method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the conditional handover method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the conditional handover method, with the same technical effect achieved. To avoid repetition, details are not described herein again.

An embodiment of this application further provides a conditional handover system, including a terminal and a network-side device. The terminal may be configured to perform the steps of the foregoing conditional handover method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A conditional handover method, comprising:
evaluating, by a terminal, a master cell group MCG execution condition and at least one of the following: a secondary cell group SCG execution condition and a conditional primary secondary cell addition or change CPAC execution condition; and
performing, by the terminal, conditional handover based on an evaluation result.

2. The method according to claim 1, wherein after the terminal evaluates the MCG execution condition and the SCG execution condition, the method further comprises at least one of the following:
in a case that a candidate primary cell PCell meets the MCG execution condition, if a conditional reconfiguration corresponding to the candidate PCell comprises a target SCG configuration, and an SCG comprised in the target SCG configuration does not meet the SCG execution condition, and/or if at least one conditional reconfiguration comprises a target SCG configuration, starting a first timer;
during running of the first timer, continuing to evaluate the MCG execution condition and the SCG execution condition;
if the MCG execution condition is met and the SCG execution condition is met, stopping the first timer; and
if the first timer expires, stopping evaluating the MCG execution condition and/or the SCG execution condition; wherein
the first timer is used to control duration of evaluating the SCG execution condition.

3. The method according to claim 1 or 2, wherein the performing, by the terminal, conditional handover based on an evaluation result comprises at least one of the following:
if the MCG execution condition is met, performing first conditional handover or second conditional handover;
if the MCG execution condition is met and a first timer expires, performing the second conditional handover, wherein the first timer is used to control duration of evaluating the SCG execution condition;
if the MCG execution condition and the SCG execution condition are met, performing the first conditional handover;
if the MCG execution condition is met but the SCG execution condition is not met, performing the second conditional handover;
in a case that execution of the first conditional handover or the second conditional handover is supported, performing the first conditional handover; and
in a case that a plurality of candidate PCells meet the MCG execution condition, selecting a candidate PCell corresponding to a conditional reconfiguration that meets the SCG execution condition as a target PCell, or selecting a candidate PCell corresponding to a conditional reconfiguration that comprises a strongest candidate primary secondary cell PSCell as the target PCell; wherein
the first conditional handover comprises: performing conditional handover to hand over to the target PCell, and applying a target SCG configuration; and the second conditional handover comprises: performing conditional handover to hand over to the target PCell.

4. The method according to claim 3, wherein the second conditional handover further comprises: in a case that a conditional reconfiguration corresponding to the target PCell comprises the target SCG configuration, skipping applying the target SCG configuration.

5. The method according to claim 3, wherein in a case that the second conditional handover is performed, the method further comprises: sending, by the terminal, a conditional handover complete message, wherein the conditional handover complete message comprises at least one of the following:
an SCG failure indication;
SCG failure type information;
an SCG measurement result; and
a measurement result of at least one target PSCell.

6. The method according to any one of claims 1 to 5, wherein before the evaluating, by a terminal, an MCG execution condition, the method further comprises: receiving, by the terminal, a conditional handover message, wherein the conditional handover message comprises at least one target execution condition, and a target execution condition comprises at least one of the following:
the MCG execution condition;
the SCG execution condition;
duration of a first timer, wherein the first timer is used to control duration of evaluating the SCG execution condition; and
an SCG evaluation indication, wherein the SCG evaluation indication is used to indicate whether to evaluate the SCG execution condition.

7. The method according to claim 6, wherein a configuration related to the SCG execution condition comprises at least one of the following:
a first measurement ID, wherein the first measurement ID is associated with the SCG execution condition;
a second measurement ID, wherein after a measurement event corresponding to the second measurement ID is triggered, it is considered that the SCG execution condition is met;
a first measurement event, wherein the first measurement event is applied to a source PSCell and/or a target PSCell;
a second measurement event, wherein a serving cell in the second measurement event is a target PSCell;
a third measurement event, wherein a neighboring cell in the third measurement event is a target PSCell;
a target threshold, wherein after a signal quality measurement value of a target PSCell is better than the target threshold, it is considered that the SCG execution condition is met; and
the duration of the first timer, wherein the first timer is used to control the duration of evaluating the SCG execution condition.

8. The method according to claim 6, wherein a configuration related to the SCG execution condition is comprised in at least one of the following:
an SCG configuration in a conditional RRC reconfiguration;
the MCG execution condition; and
a conditional reconfiguration.

9. The method according to claim 1, wherein after the terminal evaluates the MCG execution condition and the CPAC execution condition, the method further comprises at least one of the following:
in a case that a candidate PCell meets the MCG execution condition, if the CPAC execution condition comprised in a conditional reconfiguration corresponding to the candidate PCell is not met, and/or at least one conditional reconfiguration comprises a CPAC configuration, starting a first timer;
during running of the first timer, continuing to evaluate the MCG execution condition and the CPAC execution condition;
if the MCG execution condition is met and the CPAC execution condition is met, stopping the first timer; and
if the first timer expires, stopping evaluating the MCG execution condition and/or the CPAC execution condition; wherein
the first timer is used to control duration of evaluating the CPAC execution condition.

10. The method according to claim 1 or 9, wherein the performing, by the terminal, conditional handover based on an evaluation result comprises at least one of the following:
if the MCG execution condition is met, performing third conditional handover or fourth conditional handover;
if the MCG execution condition is met, after a first timer expires, performing the fourth conditional handover, wherein the first timer is used to control duration of evaluating the CPAC execution condition;
if the MCG execution condition and the CPAC execution condition are met, performing the third conditional handover;
if the MCG execution condition is met but the CPAC execution condition is not met, performing the fourth conditional handover; and
in a case that a plurality of candidate PCells meet the MCG execution condition, selecting a candidate PCell corresponding to a conditional reconfiguration that meets the CPAC execution condition as a target PCell, or selecting a candidate PCell corresponding to a conditional reconfiguration that comprises a strongest candidate PSCell as the target PCell; wherein
the third conditional handover comprises: performing conditional handover and performing CPAC, and the fourth conditional handover comprises: performing conditional handover but skipping performing CPAC.

11. The method according to claim 10, wherein in a case that the third conditional handover is performed, the method further comprises: sending, by the terminal, an RRC message to the target PCell, wherein the RRC message is used to indicate that the conditional handover is completed.

12. The method according to claim 11, wherein the RRC message comprises a CPAC complete message, and the RRC message comprises information related to a target PSCell.

13. The method according to claim 10, wherein in a case that the fourth conditional handover is performed, the method further comprises: sending, by the terminal, a conditional handover complete message, wherein the conditional handover complete message comprises at least one of the following:
an SCG failure indication;
SCG failure type information;
an SCG measurement result; and
a measurement result of a CPAC candidate cell.

14. A conditional handover method, comprising:
sending, by a network-side device, a conditional handover message to a terminal, wherein the conditional handover message comprises at least one target execution condition, and a target execution condition comprises at least one of the following:
an SCG execution condition;
duration of a first timer, wherein the first timer is used to control duration of evaluating the SCG execution condition; and
an SCG evaluation indication, wherein the SCG evaluation indication is used to indicate whether to evaluate the SCG execution condition.

15. The method according to claim 14, wherein a configuration related to the SCG execution condition comprises at least one of the following:
a first measurement ID, wherein the first measurement ID is associated with the SCG execution condition;
a second measurement ID, wherein after a measurement event corresponding to the second measurement ID is triggered, it is considered that the SCG execution condition is met;
a first measurement event, wherein the first measurement event is applied to a source PSCell and/or a target PSCell;
a second measurement event, wherein a serving cell in the second measurement event is a target PSCell;
a third measurement event, wherein a neighboring cell in the third measurement event is a target PSCell;
a target threshold, wherein after a signal quality measurement value of a target PSCell is better than the target threshold, it is considered that the SCG execution condition is met; and
the duration of the first timer, wherein the first timer is used to control the duration of evaluating the SCG execution condition.

16. The method according to claim 14, wherein a configuration related to the SCG execution condition is comprised in at least one of the following:
an SCG configuration in a conditional RRC reconfiguration;
an MCG execution condition; and
a conditional reconfiguration.

17. The method according to claim 14, wherein after the sending, by a network-side device, a conditional handover message to a terminal, the method further comprises: receiving, by the network-side device, a conditional handover complete message sent by the terminal, wherein the conditional handover complete message comprises at least one of the following:
an SCG failure indication;
SCG failure type information;
an SCG measurement result;
a measurement result of at least one target PSCell; and
a measurement result of a CPAC candidate cell.

18. A conditional handover apparatus, comprising:
a processing module, configured to evaluate an MCG execution condition and at least one of the following: an SCG execution condition and a CPAC execution condition; and
a handover module, configured to perform conditional handover based on an evaluation result.

19. The apparatus according to claim 18, wherein the processing module is further configured to perform at least one of the following:
in a case that a candidate PCell meets the MCG execution condition, if a conditional reconfiguration corresponding to the candidate PCell comprises a target SCG configuration, and an SCG comprised in the target SCG configuration does not meet the SCG execution condition, and/or if at least one conditional reconfiguration comprises a target SCG configuration, starting a first timer;
during running of the first timer, continuing to evaluate the MCG execution condition and the SCG execution condition;
if the MCG execution condition is met and the SCG execution condition is met, stopping the first timer; and
if the first timer expires, stopping evaluating the MCG execution condition and/or the SCG execution condition; wherein
the first timer is used to control duration of evaluating the SCG execution condition.

20. The apparatus according to claim 18 or 19, wherein the handover module is configured to perform at least one of the following:
if the MCG execution condition is met, performing first conditional handover or second conditional handover;
if the MCG execution condition is met and a first timer expires, performing the second conditional handover, wherein the first timer is used to control duration of evaluating the SCG execution condition;
if the MCG execution condition and the SCG execution condition are met, performing the first conditional handover;
if the MCG execution condition is met but the SCG execution condition is not met, performing the second conditional handover;
in a case that execution of the first conditional handover or the second conditional handover is supported, performing the first conditional handover; and
in a case that a plurality of candidate PCells meet the MCG execution condition, selecting a candidate PCell corresponding to a conditional reconfiguration that meets the SCG execution condition as a target PCell, or selecting a candidate PCell corresponding to a conditional reconfiguration that comprises a strongest candidate PSCell as the target PCell; wherein
the first conditional handover comprises: performing conditional handover to hand over to the target PCell, and applying a target SCG configuration; and the second conditional handover comprises: performing conditional handover to hand over to the target PCell.

21. The apparatus according to claim 20, wherein the second conditional handover further comprises: in a case that a conditional reconfiguration corresponding to the target PCell comprises the target SCG configuration, skipping applying the target SCG configuration.

22. The apparatus according to claim 20, wherein the apparatus further comprises a sending module, configured to send a conditional handover complete message in a case that the second conditional handover is performed, wherein the conditional handover complete message comprises at least one of the following:
an SCG failure indication;
SCG failure type information;
an SCG measurement result; and
a measurement result of at least one target PSCell.

23. The apparatus according to any one of claims 18 to 22, wherein the apparatus further comprises a receiving module, configured to receive a conditional handover message, wherein the conditional handover message comprises at least one target execution condition, and a target execution condition comprises at least one of the following:
the MCG execution condition;
the SCG execution condition;
duration of a first timer, wherein the first timer is used to control duration of evaluating the SCG execution condition; and
an SCG evaluation indication, wherein the SCG evaluation indication is used to indicate whether to evaluate the SCG execution condition.

24. The apparatus according to claim 23, wherein a configuration related to the SCG execution condition comprises at least one of the following:
a first measurement ID, wherein the first measurement ID is associated with the SCG execution condition;
a second measurement ID, wherein after a measurement event corresponding to the second measurement ID is triggered, it is considered that the SCG execution condition is met;
a first measurement event, wherein the first measurement event is applied to a source PSCell and/or a target PSCell;
a second measurement event, wherein a serving cell in the second measurement event is a target PSCell;
a third measurement event, wherein a neighboring cell in the third measurement event is a target PSCell;
a target threshold, wherein after a signal quality measurement value of a target PSCell is better than the target threshold, it is considered that the SCG execution condition is met; and
the duration of the first timer, wherein the first timer is used to control the duration of evaluating the SCG execution condition.

25. The apparatus according to claim 23, wherein a configuration related to the SCG execution condition is comprised in at least one of the following:
an SCG configuration in a conditional RRC reconfiguration;
the MCG execution condition; and
a conditional reconfiguration.

26. The apparatus according to claim 18, wherein the processing module is further configured to perform at least one of the following:
in a case that a candidate PCell meets the MCG execution condition, if the CPAC execution condition comprised in a conditional reconfiguration corresponding to the candidate PCell is not met, and/or at least one conditional reconfiguration comprises a CPAC configuration, starting a first timer;
during running of the first timer, continuing to evaluate the MCG execution condition and the CPAC execution condition;
if the MCG execution condition is met and the CPAC execution condition is met, stopping the first timer; and
if the first timer expires, stopping evaluating the MCG execution condition and/or the CPAC execution condition, wherein
the first timer is used to control duration of evaluating the CPAC execution condition.

27. The apparatus according to claim 18 or 26, wherein the handover module is configured to perform at least one of the following:
if the MCG execution condition is met, performing third conditional handover or fourth conditional handover;
if the MCG execution condition is met, after a first timer expires, performing the fourth conditional handover, wherein the first timer is used to control duration of evaluating the CPAC execution condition;
if the MCG execution condition and the CPAC execution condition are met, performing the third conditional handover;
if the MCG execution condition is met but the CPAC execution condition is not met, performing the fourth conditional handover; and
in a case that a plurality of candidate PCells meet the MCG execution condition, selecting a candidate PCell corresponding to a conditional reconfiguration that meets the CPAC execution condition as a target PCell, or selecting a candidate PCell corresponding to a conditional reconfiguration that comprises a strongest candidate PSCell as the target PCell; wherein
the third conditional handover comprises: performing conditional handover and performing CPAC, and the fourth conditional handover comprises: performing conditional handover but skipping performing CPAC.

28. The apparatus according to claim 27, wherein the apparatus further comprises a sending module, configured to send an RRC message to the target PCell in a case that the third conditional handover is performed, wherein the RRC message is used to indicate that the conditional handover is completed.

29. The apparatus according to claim 28, wherein the RRC message comprises a CPAC complete message, and the RRC message comprises information related to a target PSCell.

30. The apparatus according to claim 27, wherein the apparatus further comprises a sending module, configured to send a conditional handover complete message in a case that the fourth conditional handover is performed, wherein the conditional handover complete message comprises at least one of the following:
an SCG failure indication;
SCG failure type information;
an SCG measurement result; and
a measurement result of a CPAC candidate cell.

31. A conditional handover apparatus, comprising:
a sending module, configured to send a conditional handover message to a terminal, wherein the conditional handover message comprises at least one target execution condition, and a target execution condition comprises at least one of the following:
an SCG execution condition;
duration of a first timer, wherein the first timer is used to control duration of evaluating the SCG execution condition; and
an SCG evaluation indication, wherein the SCG evaluation indication is used to indicate whether to evaluate the SCG execution condition.

32. The apparatus according to claim 31, wherein a configuration related to the SCG execution condition comprises at least one of the following:
a first measurement ID, wherein the first measurement ID is associated with the SCG execution condition;
a second measurement ID, wherein after a measurement event corresponding to the second measurement ID is triggered, it is considered that the SCG execution condition is met;
a first measurement event, wherein the first measurement event is applied to a source PSCell and/or a target PSCell;
a second measurement event, wherein a serving cell in the second measurement event is a target PSCell;
a third measurement event, wherein a neighboring cell in the third measurement event is a target PSCell;
a target threshold, wherein after a signal quality measurement value of a target PSCell is better than the target threshold, it is considered that the SCG execution condition is met; and
the duration of the first timer, wherein the first timer is used to control the duration of evaluating the SCG execution condition.

33. The apparatus according to claim 31, wherein a configuration related to the SCG execution condition is comprised in at least one of the following:
an SCG configuration in a conditional RRC reconfiguration;
an MCG execution condition; and
a conditional reconfiguration.

34. The apparatus according to claim 31, wherein the apparatus further comprises a receiving module, configured to receive a conditional handover complete message sent by the terminal, wherein the conditional handover complete message comprises at least one of the following:
an SCG failure indication;
SCG failure type information;
an SCG measurement result;
a measurement result of at least one target PSCell; and
a measurement result of a CPAC candidate cell.

35. A terminal, comprising a processor and a memory, wherein the memory stores a program or instructions executable on the processor, and when the program or instructions are executed by the processor, the steps of the conditional handover method according to any one of claims 1 to 13 are implemented.

36. A network-side device, comprising a processor and a memory, wherein the memory stores a program or instructions executable on the processor, and when the program or instructions are executed by the processor, the steps of the conditional handover method according to any one of claims 14 to 17 are implemented.

37. A readable storage medium, wherein the readable storage medium stores a program or instructions, and when the program or instructions are executed by a processor, the steps of the conditional handover method according to any one of claims 1 to 17 are implemented.
